# EUROPEAN PATENT SPECIFICATION

(11) **EP 3 652 833 B1**
(45) Date of publication and mention of the grant of the patent: **04.09.2024**
(21) Application number: 18735602.7
(22) Date of filing: 10.07.2018
(51) Int. Cl.: H02H 3/093, H03K 17/08, H02H 7/22

(54) **CHARGING SYSTEM**
LADESYSTEM
SYSTÈME DE CHARGEMENT

(30) Priority: 10.07.2017 EP 17180602
(43) Date of publication of application: 20.05.2020
(73) Proprietor: ABB E-mobility B.V., 2629 JG Delft (NL)
(72) Inventor: KAPTEIN, Johan, 2497 XA Den Haag (NL)
(74) Representative: Maiwald GmbH
(86) International application number: PCT/EP2018/068635
(87) International publication number: WO 2019/011903

(56) References cited:
- US-A1- 2008 165 461
- US-A1- 2014 062 396
- US-A1- 2015 244 165

## Description

### Technical Field

The invention relates to a charging system configured for providing electrical energy to charge a battery of an electrical vehicle with a charging current I_{c}, comprising an overcurrent protection device characterized by a breaking current I_{b} switching off the overcurrent protection device.

### Background Art

Charging systems for providing electrical energy to charge a battery of an electrical vehicle are known from prior art. Said charging systems are usually connected on an AC side with a power source such as an AC grid and comprise on a DC side a plurality of charging ports providing charging current. Each charging port comprises an interface for energy exchange between the charging system and the electrical vehicle via a cable. The cable as well as other cables provided in the charging system are normally protected by fuses on the battery side and a limited current on the charger side, provided for example as fuses on the DC side and/or as fuses on the AC side of the charging system. If a short circuit occurs when charging the electrical vehicle the fuse in the electrical vehicle will break if the short circuit current is large enough. As the fuse in the electrical vehicle is hard to reach replacing a broken fuse is laborious and costly.

In practise, the let through energy of the fuse is often chosen very high, for example 12 MA²s, compared to the expected charging current required for charging the electrical vehicle. When an overcurrent occurs for example by a weak short circuit or a malfunction of the charger system, the overcurrent can be detected and the charging should be interrupted by an electrically controlled switch arranged in the charging path of the charging current. Electrically controlled switches, however, have a limited breaking capacity. If the breaking capacity is exceeded the electrically controlled switch can be destroyed. Replacing a destroyed electrically controlled switch is much more costly than replacing a broken fuse.

US 2008/165461 A1 describes a system for protecting a plurality of circuits including a plurality of circuit protective devices wherein each circuit protective device includes a respective nominal current rating.

US 2015/244165 A1 describes a battery energy storage system comprising a rechargeable battery assembly for storing and providing energy and a protection system including an arc flash protection device to protect against risks due to arc flashes.

US 2014/062396 A1 describes a system which includes a charging device that has a plurality of power converters, each of the power converters having an output terminal configured to output current at a predetermined voltage.

### Summary of invention

It is therefore an object of the invention to provide a system and a method for protecting an electrically controlled switch of a charging system for providing electrical energy to charge a battery of an electrical vehicle.

The object of the invention is solved by the features of the independent claims. Preferred embodiments are described in the dependent claims.

An electrical vehicle, abbreviated as EV and as also referred to as an electric drive vehicle or electric vehicle, uses one or more electric motors or traction motors for propulsion. EVs may include road and rail vehicles, surface and underwater vessels, electric aircraft and electric spacecraft. The term opening or switching off respectively closing or switching on means that an electrical connection is interrupted respectively established, for example by the overcurrent protection device or the electrically controlled switch. The term maximum switching current Iₘₐₓ is to be understood as the maximum current that can be switched by the electrically controlled switch with destroying or damaging the electrically controlled switch, for example as the designed load current per contact of the electrically controlled switch. The breaking current I_{b} is to be understood as the current which causes the overcurrent protection device to switch off. The battery is preferably provided as a DC battery.

A key point of the method is therefore to protect the electrically controlled switch from damage or destruction to an overcurrent by waiting for the overcurrent protection device to switch off as a result of the overcurrent and thereafter to open the electrically controlled switch, at the time t after the overcurrent protection device has switched-off.

Further embodiments and advantages of the method are directly and unambiguously derived by the person skilled in the art from the system as described above The scope of protection is defined in the appended set of claims.

### Brief description of drawings

These and other aspects of the invention will be apparent from and elucidated with reference to the embodiments described hereinafter.

In the drawings:

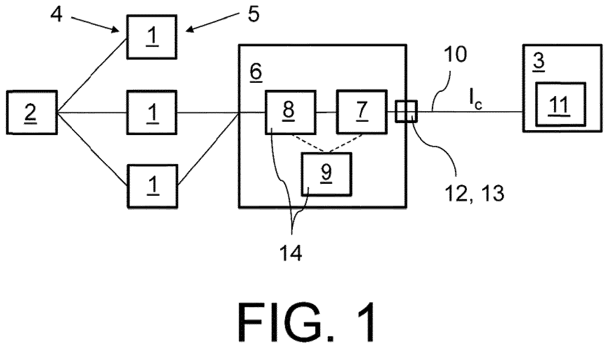

Fig. 1 shows a charging system according to preferred embodiment of the invention in a schematic view.

### Description of embodiments

Fig. 1 shows a charging system according to preferred embodiment of the invention in a schematic view comprising a plurality of power converters 1 i.e. three power converters 1, which are each configured for converting electrical energy from a power source 2, such as a power grid, to a suitable format for charging an electrical vehicle 3.

Each power converter 1 comprises an AC side 4, which is connected to the power source 2, and an DC side 5, which is connected to a charging device 6. While Fig. 1 shows only one charging device 6, multiple charging devices 6 can be present and connected to one or more of the power converters 1. As shown in the figure, the charging device 6 is electrically connected to two power converters 1. The term connected is to be understood as electrically connected.

The charging device 6 comprises an overcurrent protection device 7, an electrically controlled switch 8 and a control device 9. The overcurrent protection device 7 and the electrically controlled switch 8 are arranged in series between the power converters 1 connected to the charging device 6 and a DC cable 10, which connects a DC battery 11 of the electrical vehicle 3 with the charging device 6 for conducting a charging current I_{c}. In this way the overcurrent protection device 7 and the electrically controlled switch 8 are arranged in the current path of the charging current I_{c}. A likely source of an overcurrent is a battery of the electrical vehicle 3.

The charging device 6 further comprises a plurality of charging ports 12 for connecting the DC cable 10, whereby each charging port 11 comprises an interface 13 such as a jack. A current rating of the charging device 6 is less or equal to a current rating of charging ports 12 respectively interface 13. In an alternate not shown embodiment the overcurrent protection device 7 can be arranged on the AC side 4 or a plurality of overcurrent protection devices 7 can be arranged both on the AC side 4 and on the DC side 5.

The overcurrent protection device 7 is provided as a fuse or as a circuit breaker and is characterized by a breaking current I_{b} and by a let through energy I²t. If the charging current I_{c} exceeds the breaking current I_{b} the overcurrent protection device 7 switches off i.e. "blows" and thus interrupts the charging of the electrical vehicle 3. The electrically controlled switch 8 is provided as a contactor and is characterized by a maximum switching current Iₘₐₓ, which is greater than the breaking current I_{b}.

The control device 9 is in electrical connection with the overcurrent protection device 7 and the electrically controlled switch 8. In this way the overcurrent protection device 7, the electrically controlled switch 8, the electrical vehicle 3 and the control device 9 each comprise a communication device 14, which is configured for exchanging information regarding the breaking current I_{b}, the maximum switching current Iₘₐₓ, the let through energy I²t, the charging current I_{c} and a time t explained below.

If the charging current I_{c} exceeds the breaking current I_{b}, first the overcurrent protection device 7 switches off. The control device 9 is configured for switching off the electrically controlled switch 8 at the time t > 0 after the overcurrent protection device 7 has switched off. Therefore, the control device 9 is configured to measure the charging current I_{c}. The time t is calculated by the control device 9 as the let through energy I²t of the overcurrent protection device 7 divided by the square of the breaking current I_{b} i.e. as t = I²t/I_{b}².

Thus, in order to prevent fusing of the electrically controlled switch 8 due to an overcurrent or a malfunction the control device 9 first "waits" until the overcurrent protection device 7 switches off and second, at the timespan t thereafter, opens respectively switches off the electrically controlled switch 8. For example, with I²t = 120 kA²s and I_{b} = 200 A, the time t is 3 seconds. Thus, with the present example, if an overcurrent has occurred e.g. if the charging current I_{c} has exceeded the breaking current I_{b}, the overcurrent protection device 7 switches off and thereby interrupts the charging of the electrical vehicle. 3 second thereafter, the control device 9 causes the electrically controlled switch 8 to switch off. Thereby, the electrically controlled switch 8 is protected from breaking due to the overcurrent.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims.

### Reference signs list

- 1: power converter
- 2: power source
- 3: electrical vehicle
- 4: AC side
- 5: DC side
- 6: charging device
- 7: overcurrent protection device
- 8: electrically controlled switch
- 9: control device
- 10: cable
- 11: battery
- 12: charging port
- 13: interface
- 14: communication device

## Claims

1. Charging system configured for providing electrical energy to charge a battery (11) of an electrical vehicle (3) with a charging current I_{c}, whereby the charging system has a nominal current I_{N}, comprising
an overcurrent protection device (7) for interrupting an electrical connection, which interrupts the electrical connection at breaking current I_{b}, whereby I_{b} ≥ I_{N},
an electrically controlled switch (8) for interrupting or establishing an electrical connection, wherein the maximum current that can be switched by the electrically controlled switch is maximum switching current Iₘₐₓ, and
a control device (9) in electrical connection with at least the electrically controlled switch (8), whereby
the charging system comprising the electrical vehicle (3) and a charging device (6) configured for charging the electrical vehicle (3), whereby the charging device (6) comprises the overcurrent protection device (7), the electrically controlled switch (8) and the control device (7),
the electrically controlled switch (8) and the overcurrent protection device (7) are connected in series between power converters (1) connected to the charging device (6) and a DC cable (10) and arranged in the current path of the charging current I_{c}, and **characterized in that**
the control device (9) is configured for switching off the electrically controlled switch (8) at a time t > 0 after the overcurrent protection device (7) has switched off due to the charging current I_{c} has exceeded the breaking current I_{b}.

2. Charging system according to the previous claim, whereby the control device (9) is configured for measuring the charging current I_{c} and for switching off the electrically controlled switch (8) if the charging current I_{c} has exceeded the breaking current I_{b}.

3. Charging system according to any of the previous claims, whereby the overcurrent protection device (7) is **characterized by** a let through energy I²t and the time t is the let through energy I²t divided by the square of the breaking current I_{b}, t = I²t/I_{b}².

4. Charging system according to the previous claim, whereby the electrically controlled switch (8) and the overcurrent protection device (7) are connected in series between the electrical vehicle (3) and the charging device (6).

5. Charging system according to the previous claim, comprising a cable (10) configured for electrically connecting the electrical vehicle (3) and the charging device (6) for conducting the charging current I_{c}.

6. Charging system according to any of the previous claims, whereby the electrically controlled switch (8) is provided as a contactor.

7. Charging system according to any of the previous claims, whereby the overcurrent protection device (7) is provided as a fuse or as a circuit breaker, and/or the overcurrent protection device (7) is **characterized by** a current time graph, whereby the time t corresponds to the breaking current I_{b}.

8. Charging system according to any of the previous claims, comprising a plurality of power converters (1) configured for converting electrical energy from a power source (2) such as a power grid to a suitable format for charging the electrical vehicle (3).

9. Charging system according to the previous claim, wherein the plurality of power converters (1) each have an AC side (4) configured for connecting to the power source (2) and an DC side (5) configured for providing electrical energy to the battery (11) of the electrical vehicle (3), whereby the overcurrent protection device (7) is arranged on the AC side (4) and/or on the DC side (5) of the plurality of power converters (1).

10. Charging system according to any of the previous claims, whereby the overcurrent protection device (7), the electrically controlled switch (8) and/or the control device (9) comprise a communication device (14) configured for exchanging information regarding breaking current I_{b}, maximum switching current Iₘₐₓ, let through energy I²t, charging current I_{c} and/or time t with at least the electrical vehicle (3).

11. Charging system according to any of the previous claims, comprising a plurality of charging ports (12) each comprising an interface (13) for energy exchange with at least one electrical vehicle (13).

12. Charging system according to any of the previous claims, whereby the maximum switching current Iₘₐₓ is greater than the breaking current I_{b.}

13. Method for protecting an electrically controlled switch (8) when charging a battery (11) of an electrical vehicle (3) with a charging current I_{c}, whereby the charging system has a nominal current I_{N}, comprising
an overcurrent protection device (7) for interrupting an electrical connection, which interrupts the electrical connection at breaking current I_{b}, whereby I_{b} ≥ I_{N}, and
the electrically controlled switch (8) for interrupting or establishing an electrical connection, wherein the maximum current that can be switched by the electrically controlled switch is maximum switching current Iₘₐₓ, whereby
the charging system comprising the electrical vehicle (3) and a charging device (6) configured for charging the electrical vehicle (3), whereby the charging device (6) comprises the overcurrent protection device (7), the electrically controlled switch (8) and the control device (7),
the electrically controlled switch (8) and the overcurrent protection device (7) are connected in series between the power converters (1) connected to the charging device (6) and a DC cable (10) and arranged in the current path of the charging current I_{c}, **characterized by** further comprising the steps of:
detecting, if the overcurrent protection device (7) and has switched off due to the charging current I_{c} has exceeded the breaking current I_{b}, and
in such case switching off the electrically controlled switch (8) at a time t > 0 after the overcurrent protection device (7) has switched off.

14. Method according to the previous method claim, whereby the overcurrent protection device (7) is **characterized by** a let through energy I²t and the time t is the let through energy I²t divided by the square of the breaking current I_{b}, t = I²t/I_{b}².

## Patentansprüche

1. Ladesystem zur Bereitstellung von elektrischer Energie zum Laden einer Batterie (11) eines Elektrofahrzeugs (3) mit einem Ladestrom I_{c}, wobei das Ladesystem einen Nennstrom I_{N} aufweist, umfassend
eine Überstromschutzeinrichtung (7) zur Unterbrechung einer elektrischen Verbindung, die die elektrische Verbindung bei einem Ausschaltstrom I_{b} unterbricht, wobei I_{b} ≥ I_{N} ,
einem elektrisch gesteuerten Schalter (8) zum Unterbrechen oder Herstellen einer elektrischen Verbindung, wobei der maximale Strom, der durch den elektrisch gesteuerten Schalter geschaltet werden kann, der maximale Schaltstrom Iₘₐₓ ist, und
eine Steuereinrichtung (9), die mit mindestens dem elektrisch gesteuerten Schalter (8) elektrisch verbunden ist, wobei
das Ladesystem das Elektrofahrzeug (3) und eine Ladeeinrichtung (6) umfasst, die zum Laden des Elektrofahrzeugs (3) ausgebildet ist, wobei die Ladeeinrichtung (6) die Überstromschutzeinrichtung (7), den elektrisch gesteuerten Schalter (8) und die Steuereinrichtung (9) umfasst,
der elektrisch gesteuerte Schalter (8) und die Überstromschutzeinrichtung (7) zwischen an die Ladeeinrichtung (6) angeschlossenen Leistungswandler (1) und einem Gleichstromkabel (10) in Reihe geschaltet und im Strompfad des Ladestroms I_{c} angeordnet sind, und **dadurch gekennzeichnet, dass**
die Steuereinrichtung (9) dazu ausgebildet ist, den elektrisch gesteuerten Schalter (8) zu einem Zeitpunkt t > 0 abzuschalten, nachdem die Überstromschutzeinrichtung (7) aufgrund des Überschreitens des Ausschaltstroms I_{b} durch den Ladestrom I_{c} abgeschaltet hat.

2. Ladesystem nach dem vorhergehenden Anspruch, wobei die Steuereinrichtung (9) zum Messen des Ladestroms I_{c} und zum Abschalten des elektrisch gesteuerten Schalters (8) ausgebildet ist, wenn der Ladestrom I_{c} den Ausschaltstrom I_{b} überschritten hat.

3. Ladesystem nach einem der vorhergehenden Ansprüche, wobei die Überstromschutzeinrichtung (7) durch eine Durchlassenergie I² t gekennzeichnet ist und die Zeit t die Durchlassenergie I² t geteilt durch das Quadrat des Ausschaltstroms I_{b} , t = I t/I²_{b}² ist.

4. Ladesystem nach dem vorhergehenden Anspruch, wobei der elektrisch gesteuerte Schalter (8) und die Überstromschutzeinrichtung (7) in Reihe zwischen dem Elektrofahrzeug (3) und der Ladeeinrichtung (6) geschaltet sind.

5. Ladesystem nach dem vorhergehenden Anspruch, umfassend ein Kabel (10), das zum elektrischen Verbinden des Elektrofahrzeugs (3) und der Ladeeinrichtung (6) zum Leiten des Ladestroms I_{c} ausgebildet ist.

6. Ladesystem nach einem der vorhergehenden Ansprüche, wobei der elektrisch gesteuerte Schalter (8) als Schütz ausgebildet ist.

7. Ladesystem nach einem der vorhergehenden Ansprüche, wobei die Überstromschutzeinrichtung (7) als Sicherung oder als Leistungsschalter ausgebildet ist, und/oder die Überstromschutzeinrichtung (7) durch einen Stromzeitverlauf gekennzeichnet ist, wobei die Zeit t dem Ausschaltstrom I_{b} entspricht.

8. Ladesystem nach einem der vorhergehenden Ansprüche, dass eine Vielzahl von Leistungswandlern (1) umfasst, die so konfiguriert sind, dass sie elektrische Energie von einer Stromquelle (2) wie einem Stromnetz in ein geeignetes Format zum Laden des Elektrofahrzeugs (3) umwandeln.

9. Ladesystem nach dem vorhergehenden Anspruch, wobei die mehreren Leistungswandler (1) jeweils eine Wechselspannungsseite (4), die zum Anschluss an die Stromquelle (2) ausgebildet ist, und eine Gleichspannungsseite (5), die zur Bereitstellung von elektrischer Energie für die Batterie (11) des Elektrofahrzeugs (3) ausgebildet ist, aufweisen, wobei die Überstromschutzeinrichtung (7) auf der Wechselspannungsseite (4) und/oder auf der Gleichspannungsseite (5) der mehreren Leistungswandler (1) angeordnet ist.

10. Ladesystem nach einem der vorhergehenden Ansprüche, wobei die Überstromschutzeinrichtung (7), der elektrisch gesteuerte Schalter (8) und/oder die Steuereinrichtung (9) eine Kommunikationseinrichtung (14) aufweisen, die dazu eingerichtet ist, Informationen bezüglich des Ausschaltstroms I_{b} , des maximalen Schaltstroms Iₘₐₓ , der Durchlassenergie I² t, des Ladestroms I_{c} und/oder der Zeit t mit zumindest dem Elektrofahrzeug (3) auszutauschen.

11. Ladesystem nach einem der vorhergehenden Ansprüche, mit einer Vielzahl von Ladeanschlüssen (12), die jeweils eine Schnittstelle (13) zum Energieaustausch mit mindestens einem Elektrofahrzeug (13) aufweisen.

12. Ladesystem nach einem der vorhergehenden Ansprüche, wobei der maximale Schaltstrom Iₘₐₓ größer ist als der Ausschaltstrom I_{b.}

13. Verfahren zum Schutz eines elektrisch gesteuerten Schalters (8) beim Laden einer Batterie (11) eines Elektrofahrzeugs (3) mit einem Ladestrom I_{c} , wobei das Ladesystem einen Nennstrom I_{N} aufweist, umfassend
eine Überstromschutzeinrichtung (7) zur Unterbrechung einer elektrischen Verbindung, die die elektrische Verbindung bei einem Ausschaltstrom I_{b} unterbricht, wobei I_{b} ≥ I_{N} , und
dem elektrisch gesteuerten Schalter (8) zum Unterbrechen oder Herstellen einer elektrischen Verbindung, wobei der maximale Strom, der durch den elektrisch gesteuerten Schalter geschaltet werden kann, der maximale Schaltstrom Iₘₐₓ ist, wobei
das Ladesystem das Elektrofahrzeug (3) und eine Ladeeinrichtung (6) umfasst, die zum Laden des Elektrofahrzeugs (3) ausgebildet ist, wobei die Ladeeinrichtung (6) die Überstromschutzeinrichtung (7), den elektrisch gesteuerten Schalter (8) und die Steuereinrichtung (9) umfasst,
der elektrisch gesteuerte Schalter (8) und die Überstromschutzeinrichtung (7) in Reihe zwischen die an die Ladeeinrichtung (6) angeschlossenen Leistungswandler (1) und ein Gleichstromkabel (10) geschaltet und im Strompfad des Ladestroms I_{c} angeordnet sind, **gekennzeichnet durch** die weiteren Schritte:
feststellt, ob die Überstromschutzeinrichtung (7) und abgeschaltet hat, weil der Ladestrom I_{c} den Ausschaltstrom I_{b} überschritten hat, und
in diesem Fall das Ausschalten des elektrisch gesteuerten Schalters (8) zu einem Zeitpunkt t > 0, nachdem die Überstromschutzeinrichtung (7) ausgeschaltet hat.

14. Verfahren nach dem vorhergehenden Verfahrensanspruch, wobei die Überstromschutzeinrichtung (7) durch eine Durchlassenergie I² t gekennzeichnet ist und die Zeit t die Durchlassenergie I² t geteilt durch das Quadrat des Ausschaltstroms I_{b} , t = I²t/I_{b}² ist.

## Revendications

1. Système de charge configuré pour fournir de l'énergie électrique pour charger une batterie (11) d'un véhicule électrique (3) avec un courant de charge I_{c}, le système de charge ayant un courant nominal I_{N}, comprenant un dispositif de protection contre les surintensités (7) pour interrompre une connexion électrique, qui interrompt la connexion électrique à un courant de coupure I_{b}, où I_{b} ≥ I_{N}, un commutateur à commande électrique (8) pour interrompre ou établir une connexion électrique, le courant maximal qui peut être commuté par le commutateur à commande électrique étant un courant maximal de commutation Iₘₐₓ, et
un dispositif de commande (9) en connexion électrique avec au moins le commutateur à commande électrique (8), le système de charge comprenant le véhicule électrique (3) et un dispositif de charge (6) configuré pour charger le véhicule électrique (3), le dispositif de charge (6) comprenant le dispositif de protection contre les surintensités (7), le commutateur à commande électrique (8) et le dispositif de commande (7),
le commutateur à commande électrique (8) et le dispositif de protection contre les surintensités (7) étant connectés en série entre des convertisseurs de puissance (1) connectés au dispositif de charge (6) et à un câble CC (10) et disposés sur le chemin du courant de charge I_{c}, et étant **caractérisé en ce que**
le dispositif de commande (9) est configuré pour fermer le commutateur à commande électrique (8) à un instant t > 0 après que le dispositif de protection contre les surintensités (7) a été fermé du fait que le courant de charge I_{c} a dépassé le courant de coupure I_{b}.

2. Système de charge selon la revendication précédente, dans lequel le dispositif de commande (9) est configuré pour mesurer le courant de charge I_{c} et pour fermer le commutateur à commande électrique (8) si le courant de charge I_{c} dépasse le courant de coupure I_{b}.

3. Système de charge selon l'une quelconque des revendications précédentes, dans lequel le dispositif de protection contre les surintensités (7) est **caractérisé par** une énergie de passage I²t et le temps t est l'énergie de passage I²t divisée par le carré du courant de coupure I_{b}, t = I²t/I_{b}².

4. Système de charge selon l'une quelconque des revendications précédentes, dans lequel le commutateur à commande électrique (8) et le dispositif de protection contre les surintensités (7) sont connectés en série entre le véhicule électrique (3) et le dispositif de charge (6).

5. Système de charge selon la revendication précédente, comprenant un câble (10) configuré pour connecter électriquement le véhicule électrique (3) et le dispositif de charge (6) pour conduire le courant de charge I_{c}.

6. Système de charge selon l'une quelconque des revendications précédentes, dans lequel le commutateur à commande électrique (8) est pourvu d'un contacteur.

7. Système de charge selon l'une quelconque des revendications précédentes, dans lequel le dispositif de protection contre les surintensités (7) est prévu sous la forme d'un fusible et/ou un coupe-circuit, et/ou le dispositif de protection contre les surintensités (7) est **caractérisé par** un graphe courant-temps, où le temps t correspondant au courant de coupure I_{b}.

8. Système de charge selon l'une quelconque des revendications précédentes, comprenant une pluralité de convertisseurs de puissance (1) configurés pour convertir une énergie électrique provenant d'une source d'énergie (2) telle qu'un réseau de distribution d'énergie en un format adéquat pour la charge du véhicule électrique (3).

9. Système de charge selon l'une quelconque des revendications précédentes, dans lequel chacun de la pluralité de convertisseurs de puissance (1) a un côté CA (4) configuré pour la connexion à la source d'énergie (2) et un côté CC (5) configuré pour fournir une énergie électrique à la batterie (11) du véhicule électrique (3), le dispositif de protection contre les surintensités (7) étant disposé sur le côté CA (4) et/ou sur le côté CC (5) de la pluralité de convertisseurs de puissance (1).

10. Système de charge selon l'une quelconque des revendications précédentes, dans lequel le dispositif de protection contre les surintensités (7), le commutateur à commande électrique (8) et/ou le dispositif de protection commande (9) comprennent un dispositif de communication (14) configuré pour échanger des informations concernant le courant de coupure I_{b}, le courant maximal de commutation Iₘₐₓ, l'énergie de passage I²t, le courant de charge I_{c} et/ou le temps t avec au moins le véhicule électrique (3).

11. Système de charge selon l'une quelconque des revendications précédentes, comprenant une pluralité de ports de charge (12) comprenant chacun une interface (13) pour l'échange d'énergie avec au moins un véhicule électrique (13).

12. Système de charge selon l'une quelconque des revendications précédentes, dans lequel le courant maximal de commutation Iₘₐₓ est plus grand que le courant de coupure I_{b}.

13. Procédé de protection d'un commutateur à commande électrique (8) lors de la charge d'une batterie (11) d'un véhicule électrique (3) avec un courant de charge I_{c}, le système de charge ayant un courant nominal Iₙ, comprenant un dispositif de protection contre les surintensités (7) pour interrompre une connexion électrique, qui interrompt la connexion électrique à un courant de coupure I_{b}, où I_{b} ≥ Iₙ, et
le commutateur à commande électrique (8) pour interrompre ou établir une connexion électrique, le courant maximal qui peut être commuté par le commutateur à commande électrique étant un courant maximal de commutation Imax, le système de charge comprenant le véhicule électrique (3) et un dispositif de charge (6) configuré pour charger le véhicule électrique (3), le dispositif de charge (6) comprenant le dispositif de protection contre les surintensités (7), le commutateur à commande électrique (8) et le dispositif de commande (7),
le commutateur à commande électrique (8) et le dispositif de protection contre les surintensités (7) étant connectés en série entre les convertisseurs de puissance (1) connectés au dispositif de charge (6) et à un câble CC (10) et disposés sur le chemin du courant de charge I_{c}, **caractérisé en ce qu'**il comprend en outre les étapes de :
détection du fait que le dispositif de protection contre les surintensités (7) a été fermé du fait que le courant de charge I_{c} a dépassé le courant de coupure I_{b}, et
dans un tel cas, fermeture du commutateur à commande électrique (8) à un instant t > 0 après que le dispositif de protection contre les surintensités (7) a été fermé.

14. Procédé selon la revendication de procédé précédente, dans lequel le dispositif de protection contre les surintensités (7) est **caractérisé par** une énergie de passage I²t et le temps t est l'énergie de passage I²t divisée par le carré du courant de coupure I_{b}, t = I²t/I_{b}².
